# EUROPEAN PATENT APPLICATION

(11) **EP 1 197 145 A1**
(43) Date of publication of application: **17.04.2002**
(21) Application number: 00830663.1
(22) Date of filing: 11.10.2000
(51) Int. Cl.: A01K 95/00, A01K 97/02

(54) **Sinker system**

(71) Applicant: Ruffo, Luigi, 00040 Ardea RM (IT); Schinaia, Marco, 00040 Ardea RM (IT)
(72) Inventor: Ruffo, Luigi, 00040 Ardea RM (IT); Schinaia, Marco, 00040 Ardea RM (IT)
(74) Representative: Leone, Mario

(57) **Abstract**

It is provided a sinker system for a line (2) for fishing rods or the like, comprising a luminous source (9) and a first sinker member (1) apt to be connected with said line (2); a second sinker member (4) apt to a co-operate with said first sinker member (1); and connecting means (6,7) of said second sinker member (4) with said first sinker member (1), the arrangement being such that after the locked engagement of said second sinker member (4) with said first sinker member (1), a complete sinker is obtained.

## Description

The present invention relates to a sinker system for fishing rods lines or the like.

Sinker for lines or the like are already known, such sinker consisting of a body, or weight, of several shapes and sizes according to the use thereof. Usually, the sinker is composed of a body preferably made of lead having different shapes. The choice of such shapes is connected both with the amount of sinker required for fishing and to the kind of fishing to be performed.

In spinning rod fishing, a sinker having reduced sizes and elongated shapes is provided due to the fact that the sinker has to be thrown with the rod far away from the point where the person is situated. For example, in case of shore fishing, the person who is fishing has to throw the sinker away from the shore.

A first drawback provided by said sinkers is that for the night-fishing, a first problem comes out, i.e. that of having to signal the place where the has fallen in the water following the throwing thereof. A prior art solution provides a sinker covered with luminous material. Said luminous material must first be "excited" with an external luminous source, e.g. a torch, in order to generate luminescence for a short period of time, usually around 1 minute.

However, such prior art sinker has a drawback connected with the fact that said luminescence actually lasts too little for practical purposes, this having as a consequence for the user to repeat the exciting operation of the luminous material before the throw.

Furthermore, there is another drawback connected with the fact that sometimes, for fishing strategy, it is useful to have a luminous sinker throughout the period spent in water. Such problem has been solved up to now in a simple way, by fixing a luminous source on the sinker, or on the line edge in proximity of the sinker, but most of the times the luminous source itself was lost during the fishing activity.

Furthermore, another drawback consists in that should the person decide to change the kind of throw or should the condition of the sea change, the person will have to change the sinker. To perform this operation it is usually necessary to cut the line at the previously tied knot in order to fix the former sinker thereto and, then, tie a new sinker having different weight and/or size to the so cut line.

Therefore, the object of the present invention is that of solving the above mentioned prior art drawbacks by providing a sinker system comprising a luminous source which function does not end up in a few minutes, that does not require to be recharged by means of an external luminous source and that allows an easy interchangeability of different weights without the need of disconnecting said system from the line it is integral with.

A further object of the present invention is that of providing an easy-to-make, strong and low-cost sinker system.

Thus, the present invention provides a sinker system for fishing rods or the like, comprising a first sinker member apt to be connected to a line,
characterized in that it comprises at least one cavity apt to internally house a luminous source, said first member being such as to allow the luminous source to be visible from outside.

A detailed description of three preferred embodiments of the present invention will now be provided, given as non-limiting example, and referring to the annexed drawings, wherein:
Figure 1 is a schematic view of the sinker system of the present invention according to a first embodiment thereof;
Figure 2 is a cross section view of the sinker system of figure 1;
Figure 3 is a perspective partially section view of a second embodiment of the sinker system of the present invention; and
Figure 4 is a perspective partially section view of a third embodiment of the sinker system of the present invention.

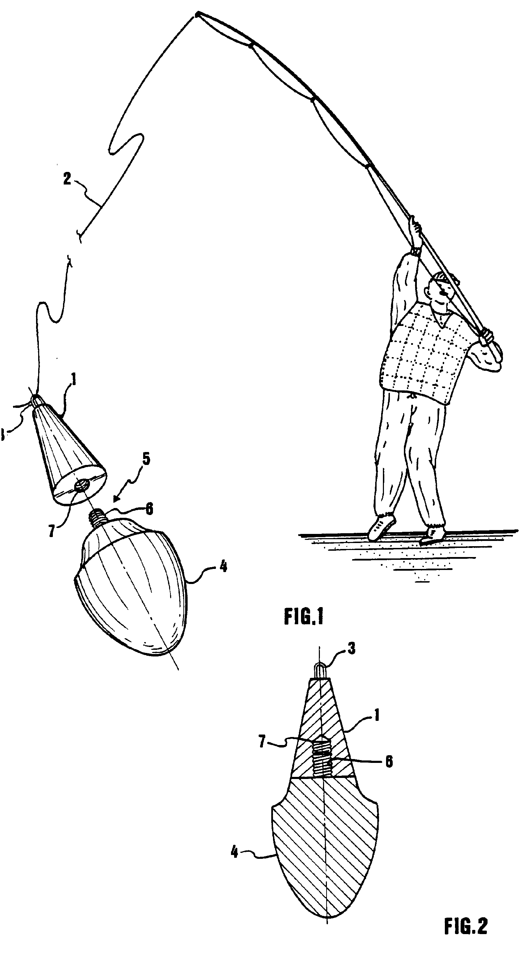

Referring now to figures 1 and 2, according to a first embodiment of the sinker system, a first sinker member 1 connected in the usual manner to a line 2 of a spinning rod by means of an annular member 3 is provided. The annular member 3 is made integral at the top edge of said first sinker member 1. The first sinker member 1 has a frustoconical shape and it is formed by a solid body.

Furthermore, a second sinker member 4 apt to engage in a locked manner with said first sinker member 1 by connecting means 5 is provided (as better illustrated herebelow).

With particular reference to figure 2, the sinker system in the assembled and therefore operating condition is illustrated thereto in a cross-sectional view.

As it can be understood from the figure, the connecting means 5 are integrally formed by a protruding grub screw 6 obtained in said second sinker member 4, and by a threaded housing 7 complementary to the grub screw 6. For the operative engagement, by engaging the grub screw 6 in the complementary threaded housing 7, the locking of the second sinker member 4 onto the first sinker member 1 is obtained, therefore forming an assembled sinker.

The arrangement is such so that after the blocking of the second member 4 onto the first member 1, a complete sinker apt to perform its task is obtained.

It is at this point necessary to point out that according to the sinker system of the present invention and according to the needs, it is possible to change the shape or the overall weight of the sinker, by simply replacing the second member 4 with another second sinker member having a different shape and/or weight but provided with a connecting grub screw 6 complementary to the first sinker member 1. Advantageously, this is performed without having to disconnect the first member 1 from the line 2 where it is connected to.

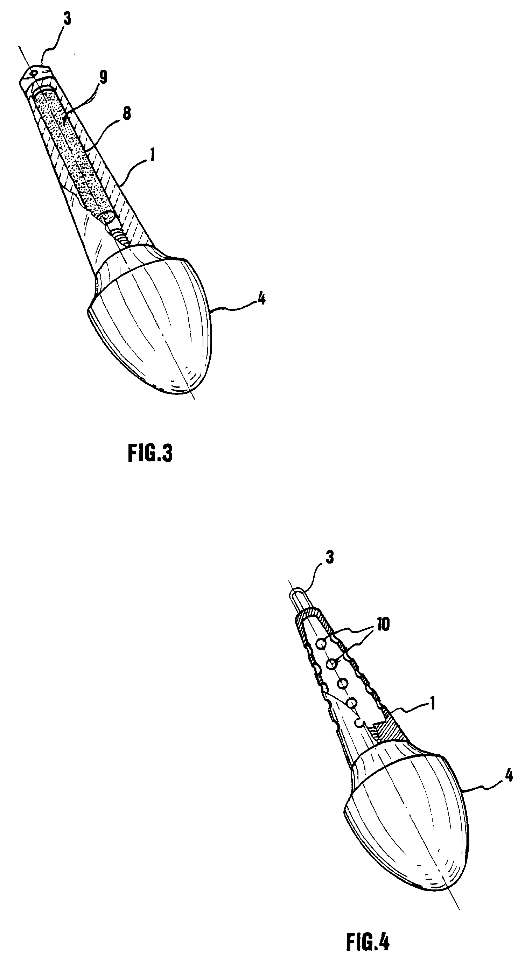

With reference now to figure 3, a second embodiment of the sinker system of the present invention is shown.

For ease of description, same parts will have same reference numbers and also the detailed description thereof will be omitted as it has already previously given.

More precisely, according to such second embodiment, said first sinker member is provided to be made in a transparent material such as, e.g. PLEXIGLASS® or the like, and to have internally a cylindrical cavity 8 apt to house a luminous source 9 of any kind. Furthermore, the cylindrical cavity 8 is provided with the threaded housing 7 for the engagement with the second sinker member 4.

More precisely, the luminous source can be of a chemical type, such as e.g. the product known with the commercial name as STARLITE® or the like. Otherwise, the luminous source can be of electrical type by housing in said cavity 8 a suitable battery and led in a way already known in the art.

The arrangement is such so that after said luminous source 9 is turned on, it can be inserted in the complementary cavity 8 and, therefore the sinker system can be assembled as already previously illustrated. In this way, the visibility of the luminous source 9 from outside is obtained. Furthermore and a luminous sinker having a long lasting luminosity and having the chance of changing weight and/or shape without necessarily disconnecting the same from the line 2 is obtained.

With reference now to figure 4, a third embodiment of the sinker system of the present invention is shown.

According to such third embodiment, it is provided for the first sinker member 1 to be formed by a hollow body provided with a plurality of holes 10 apt to put into communication the inner part with the external environment. Analogously to the two previously described embodiments, the hollow body is filleted with the threaded seat 7 in order to allow the connection with the second sinker member 4.

Such arrangement allows the insertion in the hollow body of fish food for fishing strategy reasons, and at the same time allows the making of the sinker system according to the present invention.

The present invention has several advantages.

A first advantage lies in the fact that, according to the sinker system of the present invention, it is possible to make a sinker which is suitable both for day and night fishing with spinning rod, by simply interchanging a single component of the system so as to allow the housing of any kind of luminous source, both chemical and electrical.

A second advantage of the present invention is that of making a sinker system for line fishing suitable and devoted to the night fishing strategy with under water luminous source, both for line fishing and fishing with spinning rod.

A third advantage is that of making a sinker system having several possibilities of changing weights and/or shapes to be chosen as the most suitable for each fishing strategy by doing extremely simple operations.

A fourth advantage lies in the fact that the sinker system of the present invention forms a sinker integrally with a fish food device although keeping the possibility of changing the weights and/or shapes intrinsic to the sinker system of the present invention.

## Claims

1. Sinker system for fishing rods or the like, comprising a first sinker member (1) apt to be connected to a line (2),
**characterized in that** it comprises at least one cavity (8) apt to internally house a luminous source (9), said first member (1) being such as to allow the luminous source (9) to be visible from outside.

2. Sinker system according to the previous claim, wherein said first sinker member (1) has first connecting means (3) with said line (2).

3. Sinker system according to the previous claim, wherein said first connecting means are an annular member (3) or the like integrally placed in said first sinker member (1).

4. Sinker system according to any of the previous claims further comprising:
- a second sinker member (4) apt to co-operate with said first sinker member (1); and
- second connecting means (6, 7) of said second sinker member (4) with said first sinker member (1),
the arrangement being such that, following the locked engagement of said second sinker member (4) with said first sinker member (1), a complete sinker is made.

5. Sinker system according to any of the previous claims, wherein said second connecting means are a blocking device formed by a male member (6) and by a complementary female member (7), each one of them obtained on a respective sinker member (1,4).

6. Sinker system according to any of the previous claims, wherein said first sinker member (1) is a solid body.

7. Sinker system according to any of the previous claims, wherein said first sinker member (1) is a hollow body provided with a plurality of holes (10) apt to put the inner part in contact with the external environment.

8. Sinker system according to any of the previous claims, wherein said first sinker member (1) is made of transparent material.

9. Sinker system according to any of the previous claims, wherein said second sinker member (4) is a solid body.
